# EUROPÄISCHE PATENTSCHRIFT

(11) **EP 2 086 912 B1**
(45) Veröffentlichungstag und Bekanntmachung des Hinweises auf die Patenterteilung: **07.07.2010**
(21) Anmeldenummer: 07818994.1
(22) Anmeldetag: 15.10.2007
(51) Int. Cl.: C04B 41/45, B27K 3/15

(54) **TRÄNKKONSERVIERUNG VON OBJEKTEN**
PRESERVATION OF OBJECTS BY IMPREGNATION
CONSERVATION D'OBJETS PAR IMPRÉGNATION

(30) Priorität: 20.10.2006 DE 102006050414
(43) Veröffentlichungstag der Anmeldung: 12.08.2009
(73) Patentinhaber: Heimdall Holding GmbH, 40699 Erkrath (DE)
(72) Erfinder: IBACH, Hermann, Wolf, 96110 Schesslitz (DE)
(74) Vertreter: COHAUSZ DAWIDOWICZ HANNIG & SOZIEN
(86) Internationale Anmeldenummer: PCT/EP2007/008923
(87) Internationale Veröffentlichungsnummer: WO 2008/046570

(56) Entgegenhaltungen:
- EP-A- 1 295 859
- DE-A1- 2 002 566

## Beschreibung

Die Erfindung betrifft ein Verfahren zum Konservieren von Objekten aus Stein oder Holz durch Ausfüllen der inneren Hohlräume des Objekts mit einer erhärtbaren Tränkflüssigkeit, wobei das Objekt während des Tränkens von einer Folie umhüllt ist.

Es ist bekannt, ein zu konservierendes Objekt aus Stein in einem mit der Tränkflüssigkeit gefüllten Tränkbehälter zu stellen und durch abwechselnd ausgeübten Unterdruck und Überdruck für ein Eindringen der Tränkflüssigkeit und ein Ausgasen zu sorgen. Hierbei muss das zu tränkende Objekt während der Druckphase vollkommen mit der Tränkflüssigkeit umschlossen sein. Würde das nicht der Fall sein, würde an der nicht überdeckten Stelle das Druckmedium - in der Regel Luft - in das Objekt eindringen und die bereits eingedrungene Tränkflüssigkeit unkontrolliert aus dem Kapillarsystem herausdrücken. Die vollkommene Überdeckung der in den Tränkbehälter eingelegten Objekte mit Tränkflüssigkeit erfordert einen sehr hohen Materialeinsatz an Tränkflüssigkeit, von dem nur ein kleiner Teil in die Objekte eingebracht wird. Der Rest der Tränkflüssigkeit stellt für die einzelne Tränkung "Abfall" dar und muss entsorgt werden, wenn nicht durch eine entsprechende Lagerstabilität und Aufbereitung eine Wiederverwendung für weitere Tränkvorgänge möglich ist.

Außerdem ist aus EP 1 295 859 ein Verfahren zur Konservierung von Gegenständen aus Stein durch Tränken mit einer erhärtbaren Flüssigkeit bekannt, bei dem das Objekt während des Tränkens von einer Folie umhüllt ist.

Aufgabe der Erfindung ist es, bei einem Verfahren der eingangs genannten Art den Bedarf an Tränkflüssigkeit so zu reduzieren, dass das Verhältnis Mitteleinsatz zu tatsächlichem Tränkmittelbedarf in einer wirtschaftlich vertretbaren und umweltverträglichen Größenordnung liegt.

Diese Aufgabe wird erfindungsgemäß dadurch gelöst, dass:
a) das Objekt getrocknet wird,
b) das Objekt allseitig mit einer Folie umschlossen wird,
c) das Objekt in einen Behälter eingebracht wird,
d) der Behälter mit einem fließfähigen Füllmaterial zur Ausübung eines Druckes auf die Folienaußenseite gefüllt wird,
e) der oberste Folienbereich geöffnet wird,
f) der Behälter in einen Autoclaven eingebracht wird,
g) durch die obere Folienöffnung die Tränkflüssigkeit eingefüllt wird,
h) im Autoclaven wechselnde Drücke auf das mit Folie und Tränkflüssigkeit umgebene Objekt ausgeübt werden, hierbei wechselnd zwischen Unterdruck, Normal- und Überdruck
i) nach dem vollständigen Tränken des Objekts das Objekt entnommen wird,
j) die Tränkflüssigkeit im Objekt ausgehärtet wird.

Durch diesen Ablauf wird der Hohlraum zwischen den Objekten und der Behälterwandung so stark reduziert, dass nur ca. 125 bis 150 % der tatsächlich benötigten Menge an Tränkflüssigkeit benötigt werden.

Mit diesem erfindungsgemäßen Verfahren gelingt es, die Vakuum-Druck-Volltränkung im Vollbad auch für die durch Hydrolyse und Polykondensation ausreagierende Mittel zu realisieren. Es wird eine Kieselsäureester-Volltränkung erreicht, wie sie bisher bei der bekannten Kieselsäureester-Festigung nur - unkontrolliert - im oberflächennahen Bereich erzielt wurde. Es wird eine gleichmäßige, kontrollierte und alle Kapillaren erreichende Tränkung und Festigung erreicht, so dass das Risiko einer Schalenbildung nicht auftreten kann.

Da diese Kieselsäureester-Volltränkung bis in den Kern des Objektes reicht, ist es unproblematisch, durch Zugabe eines Silans eine bis in den Kern reichende Hydrophobierung durchzuführen, so dass eine Wasseraufnahme unterbunden wird. Bei einer durchgehenden Hydrophobierung ist das Risiko ausgeschaltet, das bei der nur die Oberfläche erreichenden Anwendung von Hydrophobierungsmitteln beachtet werden muss.
Diese Volltränkung kommt auch für solche Tränkungsmittel infrage, die nicht durch Hydrolyse und Polykondensation reagieren, sondern als lösemittelhaltige Tränklösungen nur den physikalischen Prozess des Verdampfens des Lösungsmittels haben und dadurch der zwischen 5 und 35 % liegende Polymeranteil als in der Regel einen Film bildender Festkörpergehalt in den Kapillaren verbleibt (Lacksystem). Diese Lacksysteme (als Beispiel seien genannt Paraloid, Motema finish, Kieselsole) haben den Nachteil, dass sie aufgrund der sehr unterschiedlichen Teilchengrößen - die Lösungsmittel liegen im Bereich 0,5 bis 1 nm, die Feststoffgehalte der angesprochenen "Lacksysteme" bei 10 bis 1.000 nm - sich beim Eindringen in das Kapillarsystem entmischen. Dieses Entmischen, - Chromatographie-Effekt - wird bei der erfindungsgemäßen alternierenden Unterdruck-Druck-Tränkung wesentlich reduziert.

Vorteilhafte Ausgestaltungen der Erfindung sind in den Unteransprüchen ausgeführt.

Im Folgenden werden Ausführungsbeispiele der Erfindung beschrieben.

Das vorher im Sinne der deutschen Patentanmeldung DE 10 2006 024 335.8 getrocknete zu tränkende Objekt insbesondere aus Stein oder Holz wird in eine dicht schließende Folie eingeschweißt. Um ein gutes Anliegen der Folie an die Oberfläche des Objektes zu erreichen, wird ggf. innerhalb der Folie bzw. des Folienraums ein Unterdruck erzeugt, so dass sich die Folie eng an die Oberfläche des Objekts anlegt. Das so in Folie verpackte Objekt wird in einen stabilen Tränkbehälter meist mit weiteren Objekten eingelegt. Der Zwischenraum zwischen der Tränkbehälterwandung und dem eingelegten Objekt und der Zwischenraum zu benachbarten Objekten wird mit einem Medium so ausgefüllt, dass die Folie mit geringem Druck, dem statischen Druck des Mediums, an das Objekt angedrückt wird, auch wenn innerhalb der Folie kein Unterdruck besteht. Dieses Medium kann eine Flüssigkeit - vorzugsweise Wasser -, ein rieselfähiger Sand, Glasperlen oder ein Gel sein. Vorzugsweise kommt ein Medium infrage, das später leicht entfernt, insbesondere abgepumpt werden kann und bei Kontakt nicht zur Reaktion mit der Tränkflüssigkeit insbesondere mit dem Kieselsäureester kommt.

Bei den einzelnen eingelegten Objekten wird nunmehr die Folie im oberen Teil aufgeschnitten, so dass ein eng an die Gesteinsoberfläche anliegender Folienbehälter mit einem oben offenen Einfülltrichter entsteht. Der so vorbereitete Tränkbehälter wird mit dem oder den oben offenen und seitlich abgestützten Folienbehältern in eine Vakuum-Druckkammer (Autoclav) eingebracht. Dieser Autoclav hat mehrere, durch Anschlussflansche hindurchgeführte Zuleitungen, die außerhalb des Autoclaven separate Absperrventile besitzen. Jeder der einzelnen Folienbehälter wird mit einer dieser Zuleitungen verbunden.
Der Autoclav wird geschlossen und mit Unterdruck beaufschlagt. Dieser Unterdruck hat die Aufgabe, die Kapillaren des getrockeneten Objekts nunmehr auch von Luft zu befreien. Der Zeitraum - vorzugsweise 1 bis 5 Stunden - für die Aufrechterhaltung des Unterdrucks richtet sich nach den vorher ermittelten Objektparametern, insbesondere nach der Permeabilität und nach der Größe der Objekte. Unter Aufrechterhaltung des Unterdrucks wird über die Zuleitungen jedem Folienbehälter von außen die Menge an Tränkflüssigkeit zugeführt, die für die vollkommene Durchtränkung des Objektes erforderlich ist, zuzüglich eines Überschusses, der gewährleistet, dass der Flüssigkeitsspiegel während des weiteren Tränkungsvorgangs stets über der höchsten Stelle des zu tränkenden Objekts ist.

In dem Autoclav wird nunmehr ein Überdruck aufgebaut, dessen Höhe und Haltezeit wiederum von den Objektparametern abhängt. Der Druck sollte mindestens 3 bar, vorzugsweise 6 bis 8 bar betragen. Die zu beanspruchende Bandbreite des Überdrucks sollte ausreichend groß sein. Für Gesteine mit überwiegend Porenhaisdurchmessern > 5 µm reicht in der Regel ein Überdruck von 2 - 3 bar aus, für Gesteine mit Porenhaisdurchmessern von überwiegend < 0,5 µm ist ein Mindestdruck von 5 bis 6 bar erforderlich. Höhere Drücke können gewählt werden, sind aber wirtschaftlich nicht immer sinnvoll und erfordern ab Drücken von 8 bar besondere Vorsichtsmaßnahmen aufgrund des Risikos der Selbstentzündung der Tränkflüssigkeit.

Um Luftblasen im Inneren des Gesteinsobjektes zu vermeiden, wird ein 2 bis 4maliger Unterdruck/Überdruckzyklus durchgeführt, so dass die vollständige Durchtränkung des Gesteins gewährleistet ist. Nach der letzten Druckphase wird der Autoclav geöffnet, das Füllmaterial z.B. durch Absaugen entfernt, die Objekte entnommen und zum Ausreagieren des eingebrachten Tränkmittels einem für die Reaktion förderlichem Klima ausgesetzt.

Eine Variante der beschriebenen Art der Vakuum/Druck-Volltränkung besteht darin, dass die Tränkflüssigkeit bereits vor dem Verschließen des Autoclaven in die Folienbehälter eingefüllt wird, so dass auf die beschriebenen Zuleitungen und auf die Zuführung der Tränklösung verzichtet werden kann.

Eine weitere Variante der beschriebenen Unterdruck-/Überdruck-Volltränkung besteht darin, dass der "Autoclav" vor Ort über einem in situ belassenen großen Objekt aufgebaut wird, wobei durch geeignete Abdichtung im Fußbereich sicherzustellen ist, dass die erforderlichen Vakuum- und Druckphasen aufgebaut werden können. Dieser Autoclav kann aus mehreren Ringen bestehen, deren Anzahl von der Höhe des Objektes abhängt.

## Patentansprüche

1. Verfahren zum Konservieren von Objekten aus Stein oder Holz durch Ausfüllen der inneren Hohlräume des Objektes mit einer erhärtbaren Tränkflüssigkeit, wobei das Objekt während des Tränkens von einer Folie umhüllt ist,
**gekennzeichnet durch** folgende aufeinander folgende Verfahrensschritte:
a) das Objekt wird getrocknet,
b) das Objekt wird allseitig mit einer Folie umschlossen,
c) das Objekt wird in einen Behälter eingebracht,
d) der Behälter wird mit einem fließfähigen Füllmaterial zur Ausübung eines Druckes auf die Folienaußenseite gefüllt,
e) der oberste Folienbereich wird geöffnet,
f) der Behälter wird in einen Autoclaven eingebracht
g) **durch** die obere Folienöffnung wird die Tränkflüssigkeit eingefüllt,
h) im Autoclaven werden wechselnde Drücke auf das mit Folie umgebene Objekt ausgeübt, hierbei wechselnd zwischen Unterdruck, Normal- und Überdruck
i) nach dem vollständigen Tränken des Objekts wird das Objekt entnommen,
j) die Tränkflüssigkeit wird im Objekt ausgehärtet.

2. Verfahren nach Anspruch 1, **dadurch gekennzeichnet, dass** im Schritt a) das Trocknen des Objektes durch Zufuhr von Wärme und/oder trockener Luft durchgeführt wird.

3. Verfahren nach Anspruch 1 oder 2, **dadurch gekennzeichnet, dass** bei Verwendung von durch Hydrolyse und Polykondensation reagierenden Tränkmitteln das Objekt im Schritt a) nur so weit getrocknet wird, dass eine ausreichende Menge an Restfeuchtigkeit im Objekt verbleibt für die Hydrolyse und/oder Polykondensation während der Aushärtung.

4. Verfahren nach einem der vorherigen Ansprüche, **dadurch gekennzeichnet, dass** im Schritt b) nach dem Umlegen der Folie innerhalb der Folie Unterdruck zumindest solange angelegt wird, bis an der Folienaußenseite das Füllmaterial anliegt.

5. Verfahren nach einem der vorherigen Ansprüche, **dadurch gekennzeichnet, dass** im Schritt d) als außen an der Folie anliegendes Füllmaterial Wasser, Sand, ein Gel und/oder Glas- oder Keramikperlen verwendet werden.

6. Verfahren nach einem der vorherigen Ansprüche, **dadurch gekennzeichnet, dass** im Schritt g) in die obere Öffnung des obersten Folienbereiches mindestens eine Leitung angeschlossen wird, durch die aus dem Objekt austretende Gase abgeführt und/oder Tränkflüssigkeit zugeführt wird.

7. Verfahren nach einem der vorherigen Ansprüche, **dadurch gekennzeichnet, dass** im Schritt g) dafür gesorgt wird, dass während des Tränkens der Flüssigkeitsspiegel der Tränkflüssigkeit stets höher steht als das obere Ende des Objektes.

8. Verfahren nach einem der vorherigen Ansprüche, **dadurch gekennzeichnet, dass** im Schritt g) die Höhe des Flüssigkeitsspiegels der Tränkflüssigkeit durch einen Füllstandssensor gemessen wird.

9. Verfahren nach einem der vorherigen Ansprüche, **dadurch gekennzeichnet, dass** im Schritt i) zum Entfernen des Füllmaterials der Behälter abgesaugt insbesondere abgepumpt wird.

10. Verfahren nach einem der vorherigen Ansprüche 1 bis 5, **dadurch gekennzeichnet, dass** im Schritt g) die Tränkflüssigkeit von vornherein in der erforderlichen Menge vollständig in den das Objekt umgebenden Folienraum eingebracht wird.

11. Verfahren nach einem der vorherigen Ansprüche, **dadurch gekennzeichnet, dass** als Tränkflüssigkeit eine durch Hydrolyse und/oder Polykondensation reagierende Flüssigkeit insbesondere Kieselsäureester oder ein Lösungsmittelsystem oder ein Lack verwendet wird.

## Claims

1. Method for the preservation of objects made of stone or wood by filling the internal cavity of the object with an impregnating liquid, which may be hardened, in which the object is wrapped in a film during impregnation,
**characterised by** the following steps of the method following one after the other:
a) the object is dried,
b) the object is surrounded by a film on all sides,
c) the object is put into a container,
d) the container is filled with a free flow filling material to exert a pressure on the outside of the film,
e) the topmost area of the film is opened,
f) the container is put into an autoclave
g) the impregnating liquid is poured in through the opening in the top of the film,
h) changing pressures are exerted on the object surrounded by the film in the autoclave, in which they change between vacuum, normal and excess pressure
i) after completely impregnating the object, the object is removed,
j) the impregnating liquid is hardened in the object.

2. Method according to claim 1, **characterised in that** t in step a) the object is dried by supplying heat and/or dry air.

3. Method according to claim 1 or 2, **characterised in that** t with the use of an impregnating fluid, which reacts through hydrolysis and polycondensation, in step a) the object is dried only until a sufficient amount of residual moisture remains in the object for hydrolysis and/or polycondensation during hardening.

4. Method according to one of the previous claims, **characterised in that** in step b), after surrounding with film, a vacuum is applied inside the film until the filling material lies flat against the outside of the film.

5. Method according to one of the previous claims, **characterised in that** in step d) water, sand, a gel and/or glass or ceramic beads are used as filling material lying flat outside on the film.

6. Method according to one of the previous claims, **characterised in that** in step g) at least one circuit is connected in the opening at the top in the topmost area of the film, through which the escaping gases are removed from the object and/or impregnating liquid is supplied.

7. Method according to one of the previous claims, **characterised in that** in step g) it is ensured that during impregnation the level of the impregnating liquid is always higher than the top end of the object.

8. Method according to one of the previous claims, **characterised in that** in step g) the height of the level of the impregnating liquid is measured by a filling level sensor.

9. Method according to one of the previous claims, **characterised in that** in step i) the container is sucked out or particularly pumped out to remove the filling material.

10. Method according to one of the previous claims 1 to 5, **characterised in that** t in step g) from the outset the impregnating liquid is put into the area of the film surrounding the object completely in the necessary quantity.

11. Method according to one of the previous claims, **characterised in that** a liquid, which reacts through hydrolysis and/or polycondensation, particularly silicic acid esters or a solvent system or a varnish, is used as the impregnating liquid.

## Revendications

1. Procédé de conservation d'objets en pierre ou en bois par remplissage des espaces creux intérieurs de l'objet au moyen d'un liquide d'imprégnation durcissable, l'objet étant gainé d'une feuille pendant l'imprégnation, **caractérisé par** les étapes de procédé successives suivantes :
a) l'objet est séché,
b) l'objet est entouré multilatéralement d'une feuille,
c) l'objet est introduit dans un récipient,
d) le récipient est rempli d'une matière de remplissage fluide pour exercer une pression sur la face extérieure de la feuille,
e) la zone supérieure de la feuille est ouverte,
f) le récipient est introduit dans un autoclave,
g) le liquide d'imprégnation est empli au travers de l'ouverture supérieure.de la feuille,
h) des pressions alternantes sont exercées dans l'autoclave sur l'objet entouré de la feuille, ces pressions alternant alors entre une dépression, une pression normale et une surpression,
i) l'objet est retiré après son imprégnation totale,
j) le liquide d'imprégnation est durci dans l'objet.

2. Procédé suivant la revendication 1, **caractérisé en ce que,** dans l'étape a), le séchage de l'objet est réalisé par apport de chaleur et/ou d'air sec.

3. Procédé suivant l'une des revendications 1 et 2, **caractérisé en ce que,** lors de l'utilisation d'agents d'imprégnation réagissant par hydrolyse et polycondensation, l'objet n'est séché dans l'étape a) que jusqu'à ce qu'une quantité suffisante d'humidité résiduelle reste dans l'objet pour l'hydrolyse et/ou polycondensation pendant le durcissement.

4. Procédé suivant l'une des revendications précédentes, **caractérisé en ce que,** dans l'étape b), après le repli de la feuille, une dépression est appliquée à l'intérieur de la feuille au moins jusqu'à ce que la matière de remplissage s'applique sur la face extérieure de cette dernière.

5. Procédé suivant l'une des revendications précédentes, **caractérisé en ce que,** dans l'étape d), de l'eau, du sable, un gel et/ou des perles de verre ou de céramique, sont utilisés en tant que matière de remplissage s'appliquant extérieurement sur la feuille.

6. Procédé suivant l'une des revendications précédentes, **caractérisé en ce que,** dans l'étape g), au moins une conduite est raccordée dans l'ouverture supérieure de la zone supérieure de la feuille, conduite au travers de laquelle sont évacués les gaz s'échappant de l'objet et/ou le liquide d'imprégnation est admis.

7. Procédé suivant l'une des revendications précédentes, **caractérisé en ce que,** dans l'étape g), il est veillé à ce que le niveau du liquide d'imprégnation soit constamment supérieur à l'extrémité supérieure de l'objet pendant l'imprégnation.

8. Procédé suivant l'une des revendications précédentes, **caractérisé en ce que,** dans l'étape g), la hauteur du niveau du liquide d'imprégnation est mesurée par un détecteur de niveau.

9. Procédé suivant l'une des revendications précédentes, **caractérisé en ce que,** dans l'étape i), le récipient est aspiré, en particulier pompé, pour le retrait de la matière de remplissage.

10. Procédé suivant l'une des revendications 1 à 5, **caractérisé en ce que,** dans l'étape g), le liquide d'imprégnation est introduit d'emblée dans la quantité requise, totalement dans l'espace de la feuille entourant l'objet.

11. Procédé suivant l'une des revendications précédentes, **caractérisé par** l'utilisation, en tant que liquide d'imprégnation, d'un liquide réagissant par hydrolyse et/ou polycondensation, en particulier un ester d'acide silicique ou un système de solvants ou un vernis.
